Europäisches Patentamt

European Patent Office

Office européen des brevets

(11) Veröffentlichungsnummer: **0 253 121**
**A2**

(12) **EUROPÄISCHE PATENTANMELDUNG**

(21) Anmeldenummer: 87108023.0

(22) Anmeldetag: 03.06.87

(51) Int. Cl.4: **H04N 13/00**

(30) Priorität: 12.07.86 DE 3623576

(43) Veröffentlichungstag der Anmeldung:
**20.01.88 Patentblatt 88/03**

(84) Benannte Vertragsstaaten:
**DE FR GB**

(71) Anmelder: **ROBERT BOSCH GMBH**
**Postfach 50**
**D-7000 Stuttgart 1(DE)**

(72) Erfinder: **Timm, Horst**
**Ulmenweg 31**
**D-3200 Hildesheim(DE)**

(54) **Verfahren und Vorrichtung zur elektronischen Übertragung und/oder Wiedergabe von stereoskopischen Fernsehbildern.**

(57) Ein bekanntes Verfahren und eine zu seiner Durchführung geeignete Vorrichtung zur elektronischen Übertragung und/oder Aufzeichnung sowie anschließenden Wiedergabe von stereoskopischen, unter verschiedenen Blickwinkeln als monoskopische Teilbilder aufgenommenen Fernsehbildern bedient sich zur Aufnahme zweier Kameras und zu Wiedergabe zweier Monitore, von denen jeder einer Kamera zugeordnet ist. Die Übertragung und/oder Aufzeichnung erfolgt getrennt nach der Zuordnung der Kameras und Monitore. Durch optische Umlenkmittel wird das Sichtfeld für jedes Auge eines Betrachters auf die monoskopischen Teilbilder des diesem Auge zugeordneten Monitors eingeschränkt.

Bei der Erfindung werden mittels einer Multiplexschaltungsanordnung (30) aus den synchron abgetasteten Teilbildern der Kameras elektronische Halbbilder ausgewählt, die über eine gemeinsame Übertragungsstrecke (26) übertragen und/oder auf einer gemeinsamen Aufzeichnungsvorrichtung (28) aufgezeichnet werden können. Anschließend werden sie mittels einer zweiten Zeitmultiplexschaltunsanordnung (32) entsprechend ihrer Zuordnung zu den Kameras (12, 14) auf die Monitore (16, 18) aufgespalten. Als Übertragungsstrecke und Aufzeichnungsvorrichtung sind standardmäßige Ausführungen verwendbar.

FIG.1

EP 0 253 121 A2

## Verfahren und Vorrichtung zur elektronischen Übertragung und/oder Aufzeichnung sowie anschließenden Wiedergabe von stereoskopischen Fernsehbildern

Die Erfindung betrifft ein Verfahren zur elektronischen Übertragung und/oder Aufzeichnung sowie anschließenden Wiedergabe von stereoskopischen, unter verschiedenen Blickwinkeln als monoskopische Teilbilder mit zwei Kameras aufgenommenen Fernsehbildern, indem die monoskopischen Teilbilder über je einen einer Kamera zugeordneten Monitor wiedergegeben werden und das Sichtfeld für jedes Auge eines Betrachters durch optische Umlenkmittel auf die monoskopischen Teilbilder des diesem Auge zugeordneten Monitors eingeschränkt wird.

Bildliche Darstellungen aus den Bereichen der Architektur, plastischen Kunst, Technik oder Medizin vermitteln dem Betrachter oft erst durch ihre räumliche Wiedergabe eine Vorstellung der räumlichen Dimensionen der abgebildeten Objekte. Da zur optischen Wiedergabe auch in immer größeren Umfang das Medium Fernsehen dient, besteht das Bedürfnis, stereoskopische Fernsehbilder aufzunehmen, zu übertragen, aufzuzeichnen und wiederzugeben. Hierfür sind bereits eine Reihe von Vorschlägen bekannt geworden, die jedoch teils unter unbefriedigender Qualität, teils unter hohem Aufwand oder fehlender Kompatibilität mit standardisierten Übertragungs-, Aufzeichnungs-und Wiedergabeverfahren leiden.

So wurden bereits in der Vergangenheit stereoskopische Fernsehsendungen nach dem Anaglyphenverfahren ausgestrahlt. Dabei wird das räumliche Objekt unter verschiedenen Blickwinkeln mit zwei Kameras aufgenommen, von denen die eine mit einem Grünfilter und die andere mit einem Rotfilter versehen ist. Die einzelnen Rot-Grün-Bilder werden zu einem zusammengesetzten Rot/Grün-Farbfernsehsignal vereinigt, wie ein standardisiertes Farbfernsehsignal übertragen und auf einem Farbmonitor wiedergege ben. Die Betrachtung erfolgt durch eine Brille, mittels der vor dem einen Auge eines Betrachters ein Rotfilter und vor dem anderen Auge ein Grünfilter in den Strahlengang eingefügt werden. Zwar ist dieses Verfahren übertragungs-und aufzeichnungstechnisch mit standardisierten Übertragungs-und Aufnahmeverfahren für Farbfernsehsignale kompatibel, nicht jedoch optisch bei Betrachtung ohne Filter oder bei Wiedergabe mittels eines Schwarz-Weiß-Monitors. Zudem ist die Betrachtung mit Farbfiltern gewöhnungsbedürftig und auf Dauer ermüdend. Als gravierender Nachteil ist aber hervorzuheben, daß eine Wiedergabe von Farbbildern nicht möglich ist. Außerdem ist durch die Zeitschrift "IEEE Transactions und consumerelectronics", Vol. CE-31, No. 2, May 1985, Seiten 82 - 87, zur stereoskopischen Übertragung von Fernsehbildern bekanntgeworden, bei dem die unter verschiedenen Blickwinkeln mit zwei Kameras aufgenommenen Teilbilder in elektronische Halbbilder zerlegt und wechselweise über eine gemeinsame Übertragungsstrecke übertragen werden. Wiedergabeseitig ist ein einziger Monitor vorgesehen, auf dessen Bildschirm wechselweise die elektronischen Halbbilder der ei nen und diejenigen der anderen Kamera dargestellt werden. Die Betrachtung erfolgt durch eine gesteuerte Blendenanordnung, die in Form einer Brille getragen wird. Die Blenden werden durch das komplexe Synchronsignal derart gesteuert, daß sie wechselweise öffnen und schließen und zwar synchron mit der Periode der auf dem Monitor gerade wiedergegebenen Halbbilder. Zwar ist auch dieses Verfahren übertragungstechnisch mit standardisierten Übertragungsverfahren kompatibel, aufgrund der für jedes Auge des Betrachters auf die Hälfte verringerten Bildfolgefrequenz entsteht jedoch ein störender Flimmereffekt. Weiterhin ist die Blendenanordnung außerordentlich aufwendig, teuer und empfindlich gegen rauhe Behandlung und benötigt eine Steuerleitung zum Monitor. Schließlich ist das Verfahren optisch nicht kompatibel für eine Betrachtung mit bloßem Auge, da die elektronischen Halbbilder für den Betrachter zu einem Vollbild mit doppelten Konturen verschmelzen.

Ein ähnliches Prinzip, jedoch in der Ausführung eines Aufzeichnungs-und Wiedergabeverfahrens unter Verwendung einer Videoplatte ist auch in der Publi kation der "Sharp Corporation" mit dem Titel "3D VHD System, Three-Dimentional viewing with a Videodisplayer" beschrieben.

Bei einem weiteren, aus der Zeitschrift "Deutscher Drucker", Nr. 16/16-5-1985 mit dem Titel "3D Print-Medium der Zukunft? - Dargestellt am Zander-Kalender 1985" bekannten Verfahrens zur stereoskopischen Übertragung von Fernsehbildern werden von den mit zwei Kameras aufgenommenen monoskopischen Teilbildern nur die oberen oder unteren Bildhälften der gesamten Sichtfelder der Kameras ausgewählt. Diese, in der Druckschrift als Halbbilder bezeichneten Ausschnitte aus dem optischen Sichtfeld der Kameras, werden dann elektronisch vertikal aneinander gefügt, gemeinsam übertragen und/oder aufgezeichnet und auf einem einzigen Monitor wiedergegeben. Die Betrachtung erfolgt über eine Prismenbrille, mittels der die Bilder für die Augen eines Betrachers optisch zu Deckung gebracht werden. Auch dieses Verfahren ist übertraguns-und aufzeichnungstechnisch mit standardisierten Verfahren kompatibel. Nachteilig wirkt sich für den Betrachter das gegenüber dem üblichen Bildformat andere Format aus sowie die auf die Hälfte verringerte Ausnutzung der von einem Teilbild eingenommenen Bildschirmfläche mit der Folge einer verringerten Bildauflösung. Außerdem wird der stereoskopische Bildeindruck durch technisch bedingte und durch die Oberflächenkrümmung der Bildröhre hervorgerufene Geometriefehler verzerrt und dadurch verfälscht. Da die Systematik der Geometriefehler zum Beispiel im oberen Bereich des unteren Teilbildes von derjenigen im entsprechenden Bereich des oberen Teilbildes verschieden ist, kann diese Erscheinung kompensiert werden.

Schließlich wird in derselben Veröffentlichung alternativ ein Verfahren vorgeschlagen, bei dem für die Aufnahme, Übertragung bzw. Speicherung und Wiedergabe stereoskopischer, aus monoskopischen Teilbildern zusammengesetzten Fernsehbildern separate Kameras, Übertragungsstrecken und Monitore vorgesehen sind, wobei die Betrachtung der Teilbilder mit der bereits erwähnten Prismenbrille erfolgt. Dieses Verfahren vermeidet zwar die bei der zuvor erwähnten Alternative genannten Nachteile der Darstellung zweier Teilbilder auf einem Monitor, erfordert bei der Übertragung und Aufzeichnung aber den zweifachen Aufwand und ist daher übertragungs-und aufzeichnungstechnisch nicht mit dem Fernsehstandard kompatibel.

Die Erfindung geht aus von dem zuletzt genannten Stand der Technik. Ihr liegt die Aufgabe zugrunde, ein Verfahren zur elektronischen Übertragung und/oder Aufzeichnung sowie anschließenden Wiedergabe von stereoskopischen Fernsehbildern zu schaffen, daß unter Beibehaltung eines normalformatigen, flimmerfreien und hochauflösenden Bildes mit üblichem Standard zur Übertragung und/oder Aufzeichnung von Fernsehbildern kompatibel ist. Die Lösung dieser Aufgabe erfolgt bei dem im Oberbegriff des Anspruchs 1 angegebenen Verfahren mit den im kennzeichnenden Teil angegebenen Merkmalen.

Durch die Auswahl elektronischer Halbbilder aus den monoskopischen Teilbildern wird der Signalumfang jedes Teilbildes auf die Hälfte reduziert, so daß bei Zusammenfassung beider elektronischer Halbbilder gerade wieder ein Signalumfang erreicht wird, der dem eines Vollbildes entspricht. Dadurch ergibt sich die Möglichkeit, die Verarbeitung beider elektronischer Halbbilder in gleicher Weise vorzunehmen, wie sie bei elektronischen Vollbildern nach standardisierten Übertragungs-und/oder Aufzeichnungsverfahren üblich ist. Gleichzeitig bleibt das Sichtfeld der Kameras sowie die volle Bildschirmfläche der Monitore für die Bildwiedergabe beider Teilbilder erhalten. Die durch mit der Auswahl der elektronischen Halbbilder verbundene Vergrößerung des Zeilenrasters der Teilbilder wird bei gemeinsamer Betrachtung beider Teilbilder ausgeglichen, so daß ein Betrachter denselben hochauflösenden Bildeindruck erhält, wie er ihn von monoskopischen Vollbildern her kennt. Da bei der Betrachtung der Monitore keine periodische Unterbrechung des Strahlenganges erfolgt, wie es bei einem oben erwähnten bekannten Verfahren der Fall ist, ist eine für das Flimmern wesentliche Ursache ausgeschaltet. Auch Fehler der Bildgeometrie, die auf beiden Monitoren durch gleichwirkende Einflüsse hervorgerufen werden, beeinträchtigen den stereoskopischen Eindruck nicht. Da die für den Betrachter zur Deckung gebrachten Teilbilder auf gleichen Bildschirmbereichen der Monitore erscheinen, werden Verzerrungen der räumlichen Dimension kompensiert.

Bei nach dem Zeilensprungverfahren abgetasteten Teilbildern erweist es sich als besonders vorteilhaft, die elektronischen Halbbilder der einen Teilbilder aus den ungeradzahligen Zeilen und die der anderen aus den geradzahligen Zeilen zu gewinnen. Eine Abtastung nach diesem Raster erfolgt in den Kameras nämlich standardmäßig, so daß schaltungstechnische Veränderungen entbehrlich sind.

In konsequenter Weiterbildung dieses Umstandes lassen sich die nach diesem Raster erhaltenen vollständigen elektronischen Halbbilder ohne weiteres zur gemeinsamen Übertragung und/oder Aufzeichnung verwenden, indem nach vollständiger Abtastung eines Halbbildes auf die jeweils andere Kamera übergewechselt wird und bei der Wiedergabe über die Monitore entsprechend verfahren wird.

Mit Hilfe der nach einer Weiterbildung vorgesehenen Speichermittel jedes Monitors können die direkt wiedergegebenen Halbbilder gespeichert und nach der direkten Wiedergabe einmal auf dem Bildschirm wiederholt werden. Auf diese Weise lassen sich die Pausen überbrücken, die bei jedem Monitor während der direkten Wiedergabe auf dem anderen Monitor entstehen würden. Ein bei Einzelbetrachtung der Monitore, d.h. ohne optische Umlenkmittel, auftretender Flimmereffekt wird dadurch unterbunden. Wird zusätzlich bei der Wiederholung des Bildinhalts das Zeilenraster um eine Zeile vertikal verschoben, entsteht bei getrennter Betrachtung der Monitore wieder der Eindruck eines feineren Rasters wie es von monoskopischer Vollbildwiedergabe her bekannt ist.

Alternativ können die Halbbilder auch aus jeder zweiten Zeile der abgetasteten Teilbilder gewonnen werden. Dabei müssen sich die Ordnungszahlen der Zeilen der Halbbilder der einen Kamera von denen der anderen Kamera um den Wert "1" unterscheiden, damit die Zeilenraster der wiedergegebenen Halbbilder gegenseitig auf Lücke versetzt werden. Dieses Verfahren ist sowohl bei einer Abtastung nach dem Zeilensprungverfahren als auch bei einer kontinuierlichen zeilenweisen Abtastung anwendbar. Bei dieser Abwandlung werden die Halbbilder dadurch gemeinsam übertragen und/oder aufgezeichnet, daß zeilenweise von einer auf die andere Kamera übergewechselt und bei der Wiedergabe über die Monitore entsprechend verfahren wird.

Da auch bei dieser Abwandlung die Wiedergabe der Teilbilder in Form eines gröberen Rasters erfolgen würde, kann ananlog der bereits erwähnten Speicherung und Wiederholung eines vollständigen Halbbildes hier eine Speicherung und Wiederholung des Bildinhalts einer Zeile erfolgen. Der Vorteil dieses Verfahrens besteht darin, eine geringere Speicherkapazität vorzusehen. Zur Erzielung eines feineren Rasters kann auch hier bei Wiederholung des Bildinhalts die Zeile um eine Zeilenbreite versetzt wiedergegeben werden.

Werden die elektronischen Halbbilder beider Kameras in das komplexe Synchronimpulsmuster eines genormten Fernsehsignals eingebunden, so ergibt sich vom Aufbau her ein Fernsehsignal, daß sich diesbezüglich von einem monoskopischen Vollbild-Fernsehsignal nicht unterscheidet.

Ist in diesem Fall das Synchronimpulsmuster nach dem CCIR-Standard aufgebaut, so läßt sich aus der Anzahl der Impulse zwischen dem letzten Zeilenimpuls und dem Bildimpuls ein Steuersignal gewinnen, das für die Zuordnung der Kameras zu den Monitoren verwendet wird. Es handelt sich hierbei um dasselbe Signal, welches bei monoskopischer Vollbildübertragung das Raster aus ungeradzahligen Zeilen mit dem aus geradzahligen Zeilen auf Lücke setzt und so eine eindeutige Zuordnung des linken Monitors zur linken Kamera und des rechten Monitors zur rechten Kamera zuläßt, ohne daß es der zusätzlichen Übertragung eines weiteren Zuordnungssignals bedarf.

Mit gemäß als Prismenbrille ausgebildeten Umlenkmitteln lassen sich die Teilbilder der beiden Monitore für jeden Betrachter individuell zur Deckung bringen, so daß der stereoskopische Eindruck bei Betrachtung der Teilbilder auch von unterschiedlichen Standorten aus erzielt werden kann. Durch die Nebeneinanderstellung der Monitore wird der Betrachter in die Lage versetzt, eine einfache optische Justage der Zeilenraster der linken und rechten Teilbilder der Monitore auf Lücke vorzunehmen. Er kann dies durch leichtes Neigen des Kopfes zur einen oder anderen Seite tun, während dazu bei übereinander stehenden Monitoren eine Einstellung der Prismen durch Schwenken um eine Horizontalachse vorgenommen werden müßte.

Die Erfindung bezieht sich weiter auf eine Vorrichtung zur elektronischen Übertragung und/oder Aufzeichnung sowie anschließenden Wiedergabe von stereoskopischen Fernsehbildern. Diesbezüglich liegt ihr die Aufgabe zugrunde, eine Vorrichtung zu schaffen, die unter Beibehaltung eines normalformatigen, flimmerfreien und hochauflösenden Bildes mit standardisierten Übertragungsstrecken und/oder Aufzeichnungsvorrichtungen kompatibel ist und unter Verwendung standardisierter Kameras und Monitore nur geringer Schaltungsergänzungen bedarf.

Die Lösung dieser Aufgabe erfolgt bei einer Vorrichtung nach dem Oberbegriff des Anspruchs 12 mit den im kennzeichnenden Teil angegebenen Merkmalen.

Die gemäß der Erfindung vorgesehene gemeinsame Übertragungsstrecke oder Aufzeichungsvorrichtung kann wegen der Reduktion des Signalumfangs jedes elektronischen Halbbildes ebenso ausgelegt werden, wie es bei standardisierten Übertragungsstrecken oder Aufzeichnungsvorrichtungen üblich ist. Somit können diese auch unmittelbar eingesetzt werden. Zusätzlich sind nur die Zeitmultiplexschaltungsanordnungen erforderlich, bei denen die eigentlichen Schaltmittel sehr einfach ausgebildet sein können, z.B. in Form je zweier Transistoren. Eine paarweise Synchronisation der Kameras und der Monitore ist im Hinblick auf die gemeinsame Benutzung der Übertragungsstrecke und/oder auf Aufzeichnungsvorrichtung erforderlich, um beide Halbbildsignale genau in das dafür vorgesehene Zeitintervall eines komplexen Fernsehsignals einzubinden. Vorteilhaft ist dabei, daß beide Kameras bzw. beide Monitore nur jeweils einen gemeinsamen Synchronimpulsgenerator benötigen.

Durch die Bemessung und Steuerung der Torzeiten der Zeitmultiplexschaltungsanordnung nach der Periodendauer für die Abtastung eines elektronischen Halbbildes lassen sich die Steuerschaltungen der Zeitmultiplexschaltungsanordnungen ebenso aufbauen wie die Bildablenkeinrichtungen in den Kameras und Monitoren und mit dem gleichen Synchronimpulsen - schalten.

Die gemäß einer Weiterbildung in den Monitoren vorgesehenen Zwischenspeicher und Steuerungsmittel dienen zur Wiederholung eines Halbbildes in den Pausen, in denen die Signale in den Eingang des jeweils anderen Monitors eingespeist werden. Wird die Bemessung der Steuerung und Torzeiten der Zeitmultiplexschaltungsanordnungen nach der Periodendauer einer Zeile des jeweiligen Halbbildes vorgenommen, so können die Steuerungsschaltungen der Zeitmultiplexschaltungsanordnungen ebenso wie die Zeilenablenkschaltungen der Kameras und Monitore ausgeführt und mit den gleichen Synchronimpulsen angesteuert werden.

Analog wie im Zusammenhang mit der Abtastung vollständiger Schaltbilder erwähnt, ermöglichen die in den Monitoren vorgesehenen Zwischenspeicher und Steuerungsmittel eine Wiederholung des Bildinhalts der direkt wiedergegebenen Zeile um die Pause zu überbrücken, in der die Signale in den Steuereingang des jeweils anderen Monitors eingespeist wer den.

Indem bei nach dem CCIR-Standard aufgebauten Kernsignalen eine Zähl-und Steuereinrichtung für die zwischen dem letzten Zeilenimpuls auftretenden Impulsen vorgesehen ist, läßt sich ein Steuersignal gewinnen, das von den ungeradzahligen Zeilen und den geradzahligen Zeilen zusammengesetzten elektronischen Halbbildern abhängig ist. Dieses Signal läßt sich zur seitenrichtigen Aufschaltung des Ausgangs der Übertragungsstrecke bzw. der Aufzeichnungsvorrichtung auf den jeweiligen Eingang des Monitors heranziehen, indem das Steuersignal der Zeitmultiplexschaltungsanordnung zugeführt wird.

Zu Testzwecken können die Zeitmultiplexschaltungsanordnungen auch mit Steuerorganen zur permanenten Aufschaltung auf eine der beiden Kameras sowie einen der beiden Monitoren auf die entsprechende Übertragungsstrecke vorgesehen werden, da z.B. eine exakte Schärfeneinstellung für die Erzielung eines qualitativ hochwertigen stereoskopischen Bildes mit einzelnen monoskopischen Vollbildern einfacher durchzufüh ren ist.

Als Aufzeichnungsvorrichtungen sind Videobandgeräte und Videoplattenspieler verwendbar. Selbstverständlich eignen sich hierfür alle bekannten Aufnahmesysteme.

Die gemäß einer Weiterbildung als Prismenbrille ausgebildeten Umlenkmittel lassen sich aus billigem robusten Kunststoffmaterial raumsparend herstellen. Dadurch läßt sich das Gewicht der Prismenbrille auf ein Minimum beschränken, wodurch sie benutzerfreundlich wird.

Die Schwenkmöglichkeit der Prismengläser um horizontale und vertikale Achsen ermöglicht eine universelle Anpassung an alle in der Praxis üblichen Anordnungsmöglichkeiten der Monitore.

Um störende Doppelbilder von Gegenständen zu vermeiden, die in der Nähe der Monitore angeordnet sind, können zusätzlich Blenden vorgesehen werden, mit denen das Sichtfeld ausschließlich auf die Bildschirmoberfläche der Monitore beschränkt werden kann.

Weitere vorteilhafte Ausgestaltungen der Erfindung ergeben sich aus den Ansprüchen 2 - 11 und 13 - 22 in Verbindung mit der weiteren Beschreibung und der Zeichnung. Verfahren und Vorrichtung gemäß der Erfindung werden anhand eines Ausführungsbeispiels beschreiben, das in der Zeichnung dargestellt ist. Es zeigen:

Fig. 1 eine schematische Anordnung der erfindungsgemäßen Vorrichtung,

Fig. 2 eine schematische Darstellung des mittels der Prismenbrille gewonnenen virtuellen Bildeindrucks,

Fig. 3 als Blockschaltbild eine Darstellung der ersten Zeitmultiplexschaltungsanordnung mit einer gemeinsamen Zähl-und Steuerungsvorrichtung für die Zeitmultiplexschaltungsanordnung und die Kameras, und

Fig. 4 einen Ausschnitt aus einem Videoband mit aufgezeichneten Videospuren.

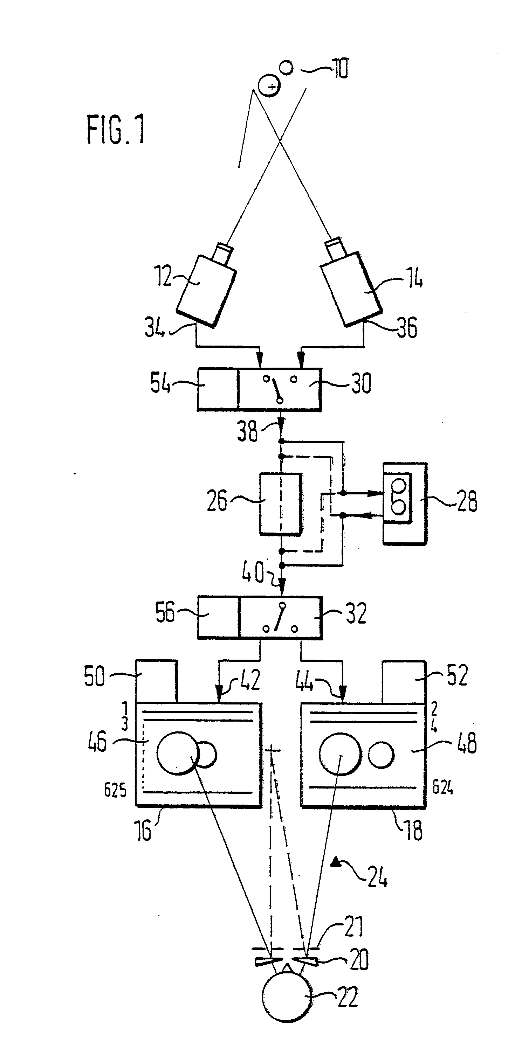

Die in Fig. 1 dargestellte Vorrichtung umfaßt im wesentlichen eine linke und rechte Kamera 12, 14, einen linken und rechten Monitor 16, 18, eine Prismenbrille 20, eine zwischen den Kameras 12, 14 und Monitoren 16, 18 angeordnete Übertragungsstrecke 26 und Aufzeichnungsvorrichtung 28 sowie eine erste und zweite Zeitmultiplexschaltungsanordnung 30, 32. Die Kameras 12, 14 sind unter verschiedenen Blickwinkeln auf ein räumliches Objekt 10 gerichtet, das auf den Monitoren 16, 18 unter diesen Blickwinkeln als monoskopische Teilbilder wiedergegeben und von einem Betrachter 22 durch die Prismenbrille 20 betrachtet wird.

Die Kameras 12, 14 und Monitore 16, 18 arbeiten nach dem CCIR-Standard im 625-Zeilenraster mit dem Zeilensprungverfahren. Von einem 625-zeiligen Vollbild werden dementsprechend zunächst die ungeradzahligen Zeilen 1, 3, 5 ... bis einschließlich 625 abgetastet. Diese ergeben ein aus ungeradzahligen Zeilen zusammen gesetztes elektronisches Halbbild. Anschließend werden die geradzahligen Zeilen 2, 4, 6 ... bis einschließlich 624 abgetastet. Diese ergeben ein aus geradzahligen zusammengesetztes elektronisches Halbbild. Für die Abtastung eines elektronischen Halbbildes wird eine fünfzigstel Sekunde benötigt, so daß in einer Sekunde fünfzig Halbbilder oder fünfundzwanzig Vollbilder abgetastet werden können. Die Kameras 12, 14 und Monitore 16, 18 arbeiten paarweise synchron, d.h., wenn eine Kamera oder ein Monitor gerade ein ungeradzeiliges Halbbild abtastet, führt dies auch die andere Kamera oder der andere Monitor aus. Beide von derselben Kamera abgetasteten Halbbilder geben dasselbe Sichtfeld wieder, zeigen gegenüber einem Vollbild ein gröberes Raster. Werden von den monoskopischen Teilbildern des Objekts 10, die von den Kameras 12, 14 noch als elektronische Vollbilder abgetastet werden, elektronische Halbbilder ausgewählt, so können diese bei der Übertragung und/oder Aufzeichnung zusammengefaßt werden und ergeben insgesamt nur den Signalumfang, den ein elektronisches Vollbild umfaßt.

Im Ausführungsbeispiel werden die elektronischen Halbbilder mit ungeradzahliger Zeilenzahl der linken Kamera 12 und solche mit geradzahliger Zeilenzahl der rechten Kamera 14 ausgewählt. Prinzipiell ist natürlich auch eine umgekehrte Zuordnung möglich, wenn dafür gesorgt wird, daß diese auch auf Seiten der Monitore 16, 18 erfolgt.

Die Auswahl der elektronischen Halbbilder wird mit der ersten Zeitmultiplexschaltungsanordnung 30 durchgeführt. Diese umfaßt Schaltmittel, die z. B. in einfachster Form aus zwei Transistoren bestehen können, mit denen ein Ausgang 34 der linken Kamera 12 und ein Ausgang 36 der rechten Kamera 14 wechselweise auf einen Eingang 38 der Übertragungsstrecke 26 oder der Aufzeichnungsvorrichtung 28 geschaltet werden kann. Die Torzeit der Zeitmultiplexschaltungsanordnung, das ist die Zeit, in der ein Verbindungsweg aktiviert ist, wird nun so bemessen und besteuert, daß der Ausgang 34 mit dem Eingang 38 während der Abtastung von Halbbildern mit ungeradzahligen Zeilen und der Ausgang 36 mit dem Eingang 38 während der Abtastung von Halbbildern mit geradzahligen Zeilen verbunden ist. Als Etscheidungskriterium, um welche Art Halbbilder es sich handelt, dient die Anzahl der Zusatzimpulse, die das Synchronimpulsmuster nach dem CCIR-Standard zwischen dem letzten Zeilenimpuls und dem Bildimpuls enthält. Diese Zahl beträgt sechs Zusatzimpulse nach Abtastung eines Halbbildes aus ungeradzahligen Zeilen und fünf Zusatzimpulse nach Abtastung eines Halbbildes aus geradzahligen Zeilen. Die Zählung und Auswirkung dieser Zusatzimpulse sowie die Erzeugung eines Steuersignals für die Steuerung der Zeitmultiplexschaltungsanordnung 30 erfolgt mittels einer Zähl-und Steuerungsvorrichtung 54.

Das an dem Eingang 38 der Übetragungsstrecke 26 oder der Aufzeichnungsvorrichtung 28 anliegende Signal enthält nun elektronische Halbbilder sowohl der linken als auch der rechten monoskopischen Teilbilder des Objektes 10. Vom Aufbau her unterscheidet sich das Signal jedoch nicht von einem solchen, das nur ein elektronisches Vollbild enthält. Dieses Signal kann nun über die Übertragungsstrecke 26 übertragen und/oder die Aufzeichnungsvorrichtung 28 aufgezeichnet und wiedergegeben werden.

Mit der Parallelschaltung der Übertragungsstrecke 26 und der Aufzeichnungsvorrichtung 28 in Fig. 1 sowie der gestrichelt gezeichneten Verbindungsleitungen soll angedeutet werden, daß beide Möglichkeiten alternativ oder in Kombination einbezogen werden. Die Übertragungsstrecke 26 kann z.B. in Form der standardmäßigen und Funkstrecke zwischen einem Fernsehstudio und einer Heimempfangsstation realisiert sein. Die Aufzeichnungsvorrichtung 28 kann mit einem standardmäßigen Videobandgerät oder einem Bildplattenspieler in Studio-oder Heimausführung bestückt sein.

Die Aufteilung des am Ausgang 40 der Übertragungsstrecke 26 bzw. der Aufzeichnungsvorrichtung 28 anliegenden Signals auf einen Eingang 42 des linken Monitors 16 und auf einen Eingang 44 des rechten Monitors 18 erfolgt über die zweite Zeitmultiplexschaltungsanordnung 32. Diese ist komplementär zu der ersten aufgebaut und arbeitet vergleichbar. Während der Übertragung oder Wiedergabe von der Aufzeichnungsvorrichtung 28 eines elektronischen Halbbildes aus ungeradzahligen Zeilen wird der Ausgang 40 mit dem Eingang 42 und während der Übertragung oder Wiedergabe eines elektronischen Halbbildes aus geradzahligen Zeilen mit dem Eingang 44 verbunden. Als Kriterium für die Art des Halbbildes und die sich daraus ergebende Zuordnung zu einem der Monitore 16, 18 dient ebenfalls die Anzahl der zwischen dem letzten Zeilenimpuls und dem Bildimpuls auftretenden Zwischenimpulse. Die Zählung und Auswertung der Zwischenimpulse und Steuerung der Zeitmultiplexschaltungsanordnung 32 übernimmt eine Zähl-und Steuerungsvorrichtung 56.

Betrachtet man nun den zeitlichen Ablauf bei der Wiedergabe der Halbbilder und beginnt mit einem aus ungeradzahligen Zeilen zusammengesetzten Halbbild, so wird das Halbbild 46 zunächst auf dem linken Monitor 16 direkt wiedergegeben. Während dieser Zeitspanne wird dem Eingang 44 des rechten Monitors 18 kein Signal zugeführt. Anschließend wird das aus geradzahligen Zeilen zusammengesetzte Halbbild 48 auf dem rechten Monitor 18 direkt wiedergegeben. Während dieser Zeitspanne wird dem Eingang 42 des linken Monitors 16 kein Signal zugeführt. Besitzen die Monitore keine ausreichende Nachleuchtdauer, so würde diese Erscheinung bei Betrachtung mit bloßem Auge zu einem unerwünschten Flimmern führen.

Um das zu verhindern, werden zur Überbrückung des Zeitraumes, an dem an die Eingänge 42, 44 der Monitore 16, 18 kein Signal gelangt, die direkt wiedergegebenen Halbbilder zwischengespeichert und einmal wiederholt. Dies geschieht durch Zwischenspeicher und Steuerungsmittel 50, 52. Solange ein Signal am Eingang 42, 44 des jeweiligen Monitors 16, 18 anliegt, wird dieses als Halbbild 46, 48 direkt wiedergegeben und gleichzeitig in den Speicher eingelesen. Sobald kein Signal mehr anliegt, wird das zuvor gespeicherte Halbbild mittels der Zwischenspeicher und Steuermittel 50, 52 ausgelesen und auf dem Bildschirm der Monitore 16, 18 wiedergegeben. Im Ausführungsbeispiel werden die wiederholten Halbbilder in demselben Zeilenraster wiedergegeben wie die direkten Halbbilder. Es ist aber auch möglich, die zu wiederholenden Halbbilder im Zeilenraster um eine Zeile versetzt wiederzugeben. Bei Betrachtung mit bloßem Auge würde sich dadurch auf jedem Monitor ein feineres Raster ergeben.

Um aus den auf den einzelnen Monitoren 16, 18 wiedergegebenen Halbbildern ein stereoskopisches Fernsehbild zu erhalten, müssen beide Halbbilder gleich zeitig betrachtet und virtuell zur Deckung gebracht werden. Dies geschieht mit der Prismenbrille 20, die in den Strahlengang 24 zwischen den Monitoren 16, 18 und den Augen eines Betrachters eingefügt wird. Die Prismenkörper der Prismenbrille 20 sind um eine vertikale und eine horizontale Achse schwenkbar. Der Betrachter kann daher die Prismenkörper so einstellen, daß auch von unterschiedlichen Standorten bei normaler Augenstellung das Sichtfeld des linken Auges auf den linken Monitor 16 und das Sichtfeld des rechten Auges auf den rechten Monitor 18 gerichtet und beschränkt wird. Zur Ausblendung störender Objekte, die eventuell doppelt gesehen werden, sind ebenfalls einstellbare Blenden 21 vor den Prismenkörpern angeordnet.

Werden die Prismenkörper nun in der beschriebenen Weise eingestellt, so nimmt der Betrachter über die Monitore 16, 18 das Objekt 10 unter den gleichen Blickwinkeln wahr, unter denen die Kameras 12, 14 auf das Objekt 10 gerichtet sind. Dadurch ergibt sich der stereoskopische Eindruck.

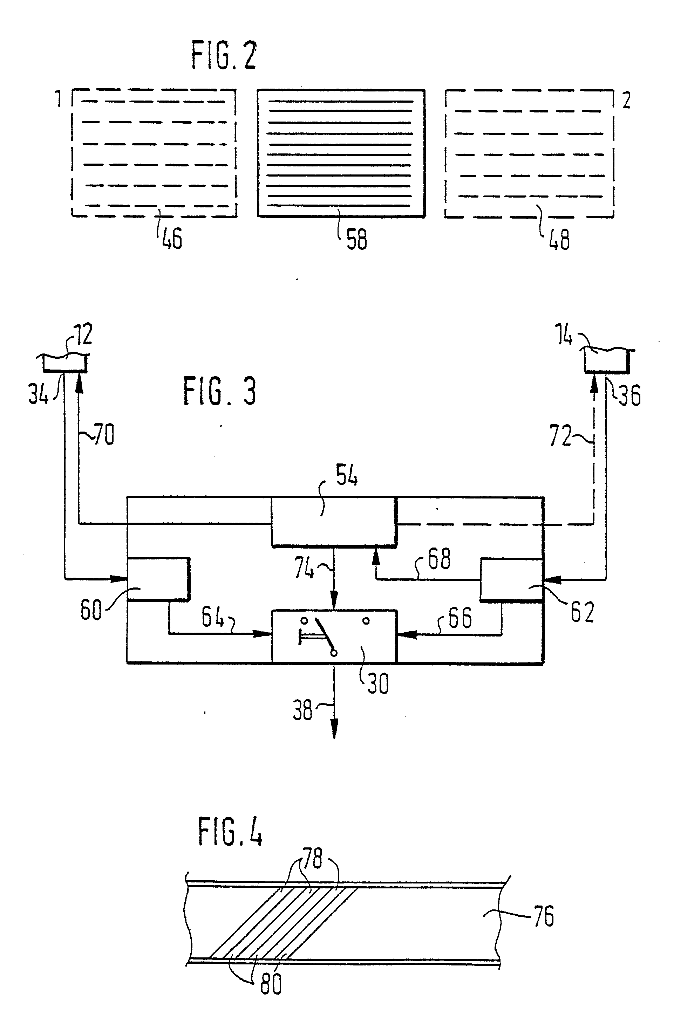

In Fig. 2 ist der sich bei richtiger Einstellung der Prismenbrille ergebende Bildeindruck veranschaulicht. Die gestrichelte Darstellung zeigt noch gesondert die Bildschirmwiedergabe des linken und des rechten Halbbildes 46, 48, während die Darstellung mit ausgezogenen Linien die zur Deckung gebrachten Halbbilder zeigt. Dabei wird deutlich, daß die groben Zeilenraster der Halbbilder auf Lücke versetzt ineinander überführt werden, so daß der Betrachter das Bild als hochauflösendes stereoskopisches Vollbild 58 empfindet.

Fig. 3 zeigt als Blockschaltbild eine mögliche Ausführungsform der Zeitmultiplexschaltungsanordnung 30 in Verbindung mit der Zähl-und Steuerungsvorrichtung 54 sowie den Kameras 12 und 14. An den Ausgängen 34, 36 der Kameras 12, 14 liegen Signale an, die in ein Synchronimpulsmuster nach dem CCIR-Standard Bildsignale umfassen. Beide Ausgänge 34, 36 sind jeweils mit Synchronimpulsabtrennstufen 60, 62 verbunden. Ausgänge dieser Stufen 60, 62 sind über Leitungen 64, 66 mit Eingängen der Zeitmultiplexschaltungsanordnung 30 verbunden. Die Leitungen 64 und 66 übertragen die Signale in unveränderter Form, sowie sie an den Augängen 34 und 36 der Kameras 12 und 14 anliegen. Ein anderer Ausgang der Synchronimpulsabtrennstufe 62 ist mit der Zähl-und Steuerungsvorrichtung 54 verbunden. Über diese Verbindungsleitung wird das Synchronimpulssignal eingespeist, das ursprünglich in einem internen Generator der rechten Kamera 14 erzeugt wird. Die Zähl-und Steuerungsvorrichtung 54 zählt die zwischen dem letzten Zeilenimpuls und dem Bildimpuls auftretenden Zwischenimpulse und wertet sie aus. Ein daraus gewonnenes Steuersignal wird über eine Verbindungsleitung 74 der Zeitmultiplexschaltungsanordnung 30 zugeführt und steuert diese. An einem weiteren Ausgang der Zähl-und Steuerungsvorrichtung 54 tritt ein Synchronimpulssignal auf, das mittels einer Verbindungsleitung 70 der linken Kamera 12 zugeführt wird und einen Gleichlauf zwischen den Kameras 12 und 14 herbeiführt. Alternativ kann die Zähl-und Steuerungsvorrichtung 54 auch selbst mit einem Synchronimpulsgenerator versehen sein. Die Synchronimpulssignale können dann über Verbindungsleitungen 70 und 72, welche nur gestrichelt eingezeichnet wurde, den entsprechenden Kameras 12, 14 zugeführt werden. Die internen Synchronimpulsgeneratoren können dann entfallen. Da die Kameras auch hinsichtlich der übrigen Einstellparameter, wie Helligkeit, Kontrast, Schärfe, Tiefe synchron arbeiten müssen, ist es zweckmäßig, auch diese Steuersignale von einer dann zu erweiternden Steuerungsvorrichtung 54 erzeugen zu lassen und den Kameras 12, 14 zuzuführen.

Durch eine andere Bemessung der Zeitmultiplexschaltungsanordnungen 30, 32 und der Zähl-und Steuerungsvorrichtungen 54, 56 auf eine Zeilenperiode kann die wechselweise Übertragung der Halbbilder auch zeilenweise durchgeführt werden. Die Speicherkapazität der Zwischenspeicher und Steuerungsmittel 50, 52 in den Monitoren 16 und 18 können dann auf den Bildinhalt einer Zeile beschränkt werden.

In Fig. 4 ist schließlich noch ein Ausschnitt eines Videobandes dargestellt, auf dem die Signalspuren aufgezeichnet sind. Es handelt sich hier um ein Videoband 76, auf dem Signale nach dem Schrägspurverfahren aufgezeichnet werden. Bei der Aufzeichnung elektronischer Halbbilder gelangen dann die aus den Teilbildern der linken Kamera ausgewählten Halbbilder auf die mit dem Bezugszeichen 78 bezeichneten Spuren und die aus Teilbildern der rechten Kamera ausgewählten Halbbilder auf die mit dem Bezugszeichen 80 bezeichneten Spuren.

## Ansprüche

1. Verfahren zur elektronischen Übertragung und/oder Aufzeichnung sowie anschließenden Wiedergabe von stereoskopischen, unter verschiedenen Blickwinkeln als monoskopische Teilbilder mit zwei Kameras aufgenommenen Fernsehbildern, in dem die monoskopischen Teilbilder gesondert über je einen einer Kamera zugeordneten Monitor wiedergegeben werden, und das Sichtfeld für jedes Auge eines Betrachters durch optische Umlenkmittel auf die monoskopischen Teilbilder des diesem Auge zugeordneten Monitors eingeschränkt wird, dadurch gekennzeichnet, daß aus den synchron abgetasteten Teilbildern der Kameras elektronische Halbbilder ausgewählt werden, diese über eine gemeinsame Übertragungsstrecke übertragen und/oder auf einer gemeinsamen Aufzeichnungsvorrichtung aufgezeichnet werden und schließlich ihrer Zuordnung zu den Kameras entsprechend auf die Monitore verteilt werden.

2. Verfahren nach Anspruch 1, dadurch gekennzeichnet, daß bei nach dem Zeilensprungverfahren abgetasteten Teilbildern die elektronischen Halbbilder der einen Kamera aus den ungeradzahligen Zeilen und diejenigen der anderen Kamera aus den geradzahligen Zeilen gewonnen werden.

3. Verfahren nach Anspruch 2, dadurch gekennzeichnet, daß die vollständigen elektronischen Halbbilder der Kameras wechselweise übertragen und/oder aufgezeichnet und wiedergegeben werden.

4. Verfahren nach anspruch 3, dadurch gekennzeichnet, daß die vollständigen elektronischen Halbbilder während der direkten Wiedergabe auf dem zugeordneten Monitor zusätzlich von Speichermitteln dieses Monitors zwischengespeichert und anschließend deckungsgleich oder um eine Zeile versetzt ein zweites Mal wiedergegeben werden.

5. Verfahren nach Anspruch 1, dadurch gekennzeichnet, daß die elektronischen Halbbilder der beiden Kameras aus jeder zweiten Zeile der abgetasteten Teilbilder gewonnen werden, wobei sich jedoch die Ordnungszahlen der Zeilen der Teilbilder der einen Kamera von denen der anderen Kamera um den Wert "1" unterscheiden.

6. Verfahren nach Anspruch 5, dadurch gekennzeichnet, daß die elektronischen Halbbilder der einen Kamera zeilenweise im Wechsel mit denen der anderen Kamera übertragen und/oder aufgezeichnet und wiedergegeben werden.

7. Verfahren nach Anspruch 6, dadurch gekennzeichnet , daß während der direkten Wiedergabe einer Zeile der elektronischen Halbbilder auf dem zugeordneten Monitor, der Bildinhalt dieser Zeile zusätzlich von Speichermitteln dieses Monitors zwischengespeichert und anschließend deckungsgleich oder um eine Zeile versetzt ein zweites Mal wiedergegeben wird.

8. Verfahren nach einem der vorhergehenden Ansprüche 1 - 7, dadurch gekennzeichnet, daß das die elektronischen Halbbilder beider Kameras umfassende Signal in das komplexe Synchronimpulsmuster eines genormten Fernsehsignals eingebunden wird.

9. Verfahren nach Anspruch 3 oder 4, dadurch gekennzeichnet , daß bei Einbindung des die elektronischen Halbbilder beider Kameras umfassende Signal in das komplexe Synchronimpulsmuster eines Fernsehsignals nach dem CCIR-Standard die Zahl der zwischen dem letzten Zeilenimpuls und dem Bildimpuls auftretenden Impulse ausgewertet wird und das Ergebnis als Steuersignal für die Zuordnung der Kameras zu den Monitoren aufbereitet und einer Umschaltanordnung zugeführt wird.

10. Verfahren nach einem der vorhergehenden Ansprüche 1 - 9, dadurch gekennzeichnet, daß die auf den Monitoren wiedergegebenen monoskopischen Teilbilder durch in den Strahlengang vor die Augen eines Betrachters eingefügte einstellbare optische Umlenkmittel, z.B. in Form einer Prismenbrille, zur virtuellen Erzeugung eines stereoskopischen Vollbildes zur Deckung gebracht werden.

11. Verfahren nach einem der vorhergehenden Ansprüche 1 - 10, dadurch gekennzeichnet, daß die Monitore beliebig nebeneinander angeordnet werden.

12. Vorrichtung zur elektronischen Übertragung und/oder Aufzeichnung sowie anschließenden Wiedergabe von stereoskopischen, unter verschiedenen Blickwinkeln als monoskopische Teilbilder aufgenommenen Fernsehbildern, bestehend aus zwei parallel oder im Winkel zueinander angeordneten Kameras (12, 14), Übertragungs- und/oder Aufzeichnungsmitteln, zwei jeweils einer Kamera zugeordneten Monitoren (16, 18) sowie im Strahlengang (24) zwischen den Monitoren (16, 18) und den Augen eines Betrachters (22) angeordneten optischen Umlenkmitteln, insbesondere zur Durchführung des Verfahrens nach einem der Ansprüche 1 - 11, dadurch gekennzeichnet , daß die Übertragungs-und Aufzeichnungsmittel als gemeinsame Übertragungsstrecke (26) beziehungsweise als gemeinsame Aufzeichnungsvorrichtung (28) ausgebildet sind, daß zwischen den Ausgängen (34, 36) der Kameras (12, 14) und dem Eingang (38) der Übertragungsstrecke (26) bzw. der Aufzeichnungsvorrichtung (28) eine erste Zeitmultiplexschaltungsanordnung (30) vorgesehen ist und zwischen dem Ausgang (40) der Übertragungsstrecke (26) bzw. der Aufzeichnungsvorrichtung (28) und den Eingängen (42, 44) der Monitore (16, 18) eine zweite Zeitmultiplexschaltungsanordnung, (32) vorgesehen ist, und daß die Kameras (12, 14) und die Monitore (16, 18) paarweise synchronisiert sind.

13. Vorrichtung nach Anspruch 12, dadurch gekennzeichnet, daß bei Abtastung der Teilbilder nach dem Zeilensprungverfahren die Torzeiten der Zeitmultiplexschaltungsanordnungen (30, 32) so bemessen und gesteuert sind, daß sie mit der Periodendauer der Abtastung eines vollständigen elektronischen Halbbildes (46, 48) aus ungeradzahligen Zeilen bzw. geradzahligen Zeilen der jeweiligen Kamera (12, 14) beziehungsweise des jeweiligen Monitors (16, 18) zusammenfallen, derart, daß die Zeitmultiplexschaltungsanordnungen (30, 32) als alternierende Halbbildschalter dienen.

14. Vorrichtung nach Anspruch 13, dadurch gekennzeichnet, daß in jedem der Monitore (16, 18) Zwischenspeicher und Steuerungsmittel (50, 52) zur gleichzeitigen Wiedergabe und vollständigen Speicherung eines in den Eingang (42, 44) des jeweiligen Monitors (16, 18) eingespeisten elektronischen Halbbildes (46, 48) und anschließenden einmaligen Wiederholung des gespeicherten Halbbildes vorgesehen sind.

15. Vorrichtung nach Anspruch 12, dadurch gekennzeichnet, daß die Torzeiten der Zeitmultiplexschaltungsanordnungen (30, 32) so bemessen und gesteuert sind, daß sie mit der Periodendauer einer Zeile des jeweiligen Teilbildes zusammen fallen, derart daß die Zeitmultiplexschaltungsanordnungen (30, 32) als alternierende Zeilenschalter dienen.

16. Vorrichtung nach Anspruch 13, dadurch gekennzeichnet, daß in jedem der Monitore (16, 18) Zwischenspeicher und Steuerungsmittel (50, 52) vorgesehen sind zur gleichzeitigen Wiedergabe und vollständigen Speicherung des Bildinhalts eines in den Eingang (42, 44) des jeweiligen Monitors (16, 18) eingespeisten Zeilensignals und anschließender Wiederholung des Bildinhalts des gespeicherten Zeilensignals.

17. Vorrichtung nach Anspruch 13 oder 14, dadurch gekennzeichnet, daß die Kameras (12, 14) und die erste Zeitmultiplexschaltungsanordnung (30) mit Mitteln zur Erzeugung eines die elektronischen Halbbilder beider Kameras in das komplexe Synchronimpulsmuster nach dem CCIR-Standard einbindenden Fernsehsignals versehen sind, wobei eine vorbestimmte Zuordnung zwischen aus ungeradzahligen Zeilen und geradzahligen Zeilen zusammengesetzten elektronischen Halbbildern (46, 48) zu der linken und rechten Kamera (12, 14) getroffen ist, und daß zur Steuerung der zweiten Zeitmultiplexschaltungsanordnung (32) eine Zähl- und Steuervorrichtung (56) vorgesehen ist zur Erzeugung eines die seitenrichtige Aufschaltung des Ausgangs (40) der Übertragungsstrecke (26) bzw. der Aufzeichnungsvorrichtung (28) auf den jeweiligen Eingang (42, 44) der Monitore (16, 18) herbeiführenden, aus der Anzahl der zwischen dem letzten Zeilenimpuls und dem Bildimpuls auftretenden Impulse gewonnenen Steuersignals.

18. Vorrichtung nach einem der vorhergehenden Ansprüche 12 - 17, dadurch gekennzeichnet, daß die Zeitmultiplexschaltungsanordnungen (30, 32) mit Steuerorganen zur permanenten Aufschaltung einer der beiden Kameras (12, 14) sowie einer der beiden Monitore (16, 18) auf die Übertragungsstrecke (26) bzw. die Aufzeichnungsvorrichtung (28) versehen sind.

19. Vorrichtung nach einem der Ansprüche 12 -18, dadurch gekennzeichnet, daß die Aufzeichnungsvorrichtung (28) ein Videobandgerät oder ein Videoplattenspieler ist.

20. Vorrichtung nach einem der Ansprüche 12 -19, dadurch gekennzeichnet , daß als optische Umlenkmittel Prismenkörper dienen, die in Form einer Prismenbrille (20) zu tragen sind.

21. Vorrichtung nach Anspruch 20, dadurch gekennzeichnet, daß wenigstens einer der Prismenkörper um eine horizontale und/oder vertikale Achse schwenkbar ist.

22. Vorrichtung nach Anspruch 20 oder 21, dadurch gekennzeichnet, daß zusätzliche Blenden (21) vor oder hinter den Prismenkörpern der Prismenbrille (20) angeordnet sind.

FIG.1

0 253 121

## FIG. 2

1 — 46

58

2 — 48

## FIG. 3

12

34 — 70

14

36 — 72

54

74 — 68

60

64 — 66

62

30

38

## FIG. 4

78

76

80